# EUROPÄISCHE PATENTSCHRIFT

(11) **EP 0 661 474 B1**
(45) Veröffentlichungstag und Bekanntmachung des Hinweises auf die Patenterteilung: **19.11.1997**
(21) Anmeldenummer: 94115077.3
(22) Anmeldetag: 24.09.1994
(51) Int. Cl.: F16D 1/072, F16B 4/00

(54) **Wellen-Befestigung**
Shaft mounting
Fixation sur un arbre

(30) Priorität: 31.12.1993 DE 4345099
(43) Veröffentlichungstag der Anmeldung: 05.07.1995
(73) Patentinhaber: Alpha Getriebebau GmbH, D-97999 Igersheim (DE)
(72) Erfinder: Wittenstein, Manfred, D-97980 Bad Mergentheim (DE)
(74) Vertreter: Patentanwalts-Partnerschaft Rotermund + Pfusch

(56) Entgegenhaltungen:
- DE-A- 2 925 058
- DE-A- 3 732 223
- FR-A- 2 493 196

## Beschreibung

Die Erfindung betrifft eine Wellen- bzw. Schaft-Befestigung nach dem Oberbegriff des Patentanspruchs 1 oder 2.

Eine solche Wellen- oder Schaftbefestigung ist aus DE-A-3 732 223 bekannt.

Von diesem Stand der Technik ausgehend beschäftigt sich die Erfindung mit dem Problem, die Genauigkeit der zentrischen Aufnahme der zu befestigenden Welle, insbesondere eines Ritzelschaftes, innerhalb des Aufnahmeteiles zu verbessern.

Gelöst wird dieses Problem durch je eine Ausführung der gattungsgemäßen Wellen-Befestigungen nach den kennzeichnenden Merkmalen der Patentansprüche 1 oder 2.

Es hat sich gezeigt, daß insbesondere bei Ritzel-Befestigungen in spielarmen Planetengetrieben erst eine solche Verbindung die auf diesem Gebiet gestellten Genauigkeitsanforderungen funktionssicher erfüllt.

Die Erfindung beruht in erster Linie auf dem Gedanken, die Welle bzw. den Schaft beim Einschneiden des gezahnten Wellenbereiches B in den entsprechenden Bohrungsabschnitt B' des Aufnahmeteiles während des gesamten Einschneidvorganges vor und hinter diesem Abschnitt zentrisch in der Bohrung zu führen. Um dies zu erreichen, sind die Bohrung des Aufnahmeteiles und der Befestigungsbereich der Welle bzw. des Schaftes in jeweils drei Abschnitte A',B',C' bzw. A,B,C aufzuteilen. Dabei müssen die drei Bereiche der Bohrung jeweils unterschiedliche in Fügerichtung abnehmende Durchmesser aufweisen. Bei der Welle bzw. dem Schaft müssen lediglich die Bereiche A,B einerseits und C andererseits voneinander unterschiedliche Durchmesser besitzen. Der kleinere Durchmesser entfällt dabei auf den Bereich C. Weichen auch die Durchmesser von den Bereichen A,B voneinander ab, so weist der Bereich B den gegenüber A kleineren Durchmesser auf.

Die Ausführungsform mit durchmessergleichen Wellen- bzw. Schaft-Bereichen A,B läßt gegenüber der Alternative mit drei unterschiedlichen Durchmesserbereichen eine kürzere Baulänge der Verbindung zu. Hierauf wird weiter unten im Rahmen eines konkreten Baulängenvergleiches beider Ausführungsformen noch näher eingegangen werden.

Bezüglich eines Wellen- bzw. Schaftbesfestigungsbereiches mit durchmessergleichen Bereichen A,B sei hier daher lediglich auf den grundsätzlichen Unterschied dieser Version gegenüber der alternativen Lösungsvariante mit drei unterschiedlichen Durchmesserbereichen hingewiesen. Dieser besteht darin, daß bei durchmessergleichen Bereichen A,B der gezahnte Bereich B beim Fügen mit zur Zentrierung herangezogen wird. Dies geschieht dadurch, daß die Welle bzw. der Schaft in dem gezahnten Bereich B über ihre Kopfkreisabschnitte solange zentrisch paßgenau in dem Bohrungsbereich A anliegt und geführt wird, bis dieser Bereich B vollständig in den zugehörigen Bohrungsbereich B' eingeschnitten ist. Mit beim Fügen abnehmender Führungslänge des Wellen- bzw. Schaftbereiches B innerhalb des Bohrungsbereiches A' greift mit zunehmender Länge der Wellen- bzw. Schaftbereich A als paßgenaue Zentrierung ein.

Bei der erfindungsgemäßen Wellen- bzw. Schaft Befestigung kann das Fügen der miteinander zu verbindenden Teile unter gleichzeitigem Einschneiden des Wellen- bzw. Schaftbereiches B in den zugehörigen Bohrungsbereich B' bei einer Temperatur des betreffenden Wellenbereiches erfolgen, die unterhalb der Temperatur des Aufnahmeteiles liegt. Dadurch wird nach Temperaturausgleich noch ein zusätzlicher Preßsitz zwischen den verbundenen verzahnt ineinandergreifenden Teilen erreicht.

Bei Wellen bzw. Schäften mit unterschiedlichen Durchmesser-Bereichen A,B,C sind vor dem bzw. spätestens bei Beginn des Einschneidens des Wellenbereiches B die beiden Wellenbereiche A und C bereits zentriert.

Bei durchmessergleichen Wellen- bzw. Schaftbereichen A,B sind folgende zwei Füge-Varianten möglich.
(a) Der Wellen- bzw. Schaftbereich B zentriert als erstes in dem Bohrungsbereich A. Eine Zentrierung des Wellen- bzw. Schaftbereiches C beginnt erst nach einem Einsetzen des Schneidvorgangs in dem Bohrungsbereich B'. Die Zentrierung des Wellen- bzw. Schaftbereiches A setzt erst nach Beginn des Einschneidens des Wellenbereiches B in den Bohrungsbereich B' ein. Die Bedingung für diese Ausführung lautet
   C kleiner als B'.
(b) Das Einschneiden des Wellen- bzw. Schaftbereiches B erfolgt bei gleichzeitiger Zentrierung der Wellen- bzw. Schaftbereiche B und/oder A einerseits und C andererseits. Dies setzt voraus, daß
   C größer als B'.

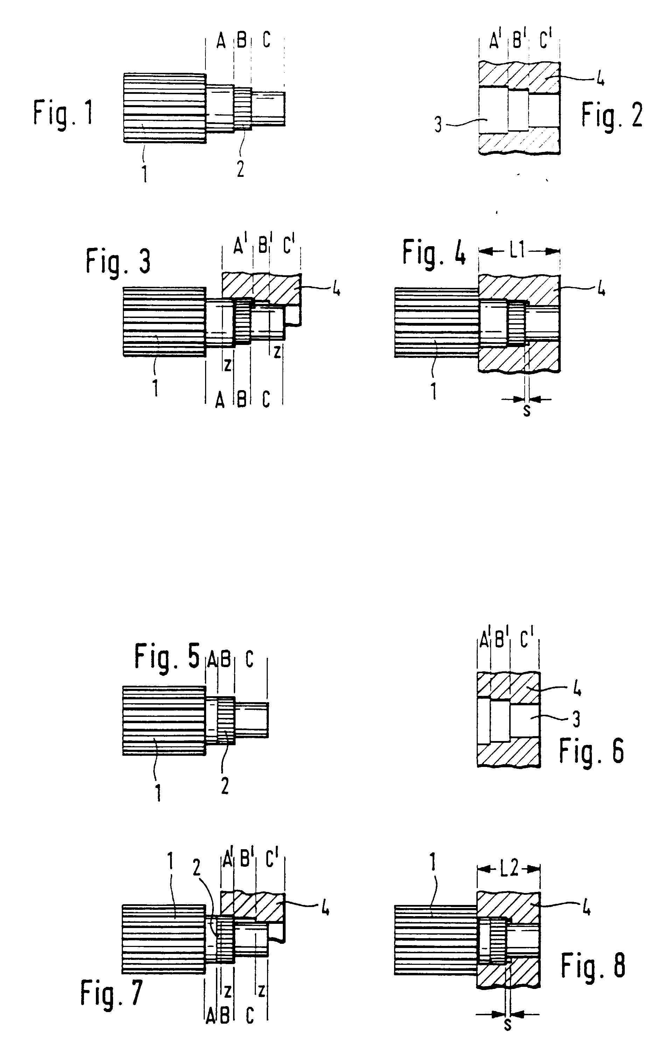

## Patentansprüche

1. Wellen- bzw. Schaft-Befestigung in einer Bohrung eines Aufnahmeteiles,
mit den Merkmalen:
a) die Welle bzw. der Schaft (2) ist über einen an ihr bzw. an ihm gezahnten, insbesondere gerändelten Bereich B, in einen Bereich B' der Bohrung (3) formschlüssig eingeschnitten,
b) an der Welle bzw. dem Schaft (2) ist in Fügerichtung vor dem gezahnten Bereich B ein paßgenau in einen Bereich C' der Bohrung eingreifender Paßabschnitt C vorhanden,
c) die buchstabengleichen Bereiche B, B' bzw. C, C' der Welle bzw. des Schaftes (2) und der Bohrung (3) liegen bei in der Bohrung (3) befestigter Welle bzw. befestigtem Schaft (2) aufeinander,
d) die Bohrung (3) ist in drei axial aneinandergrenzende Bereiche A', B', C' mit gegeneinander kleiner werdenden Durchmessern aufgeteilt, beginnend mit dem Bereich A' mit größtem Durchmesser, in den die Welle bzw. der Schaft (2) mit ihrem bzw. seinem Bereich C zuerst eingefügt wird,
e) die Welle bzw. der Schaft (2) besitzt ebenfalls drei axial aneinandergrenzende Bereiche A, B, C, die in befestigtem Zustand den buchstabengleichen Bereichen der Bohrung (3) zugeordnet sind,
f) der Durchmesser des Bereiches C der Welle bzw. des Schaftes (2) ist kleiner als die Außen-Durchmesser der beiden anderen Bereiche A, B,
g) die Bereiche A und C der Welle bzw. des Schaftes (2) liegen paßgenau in den zugehörigen Bohrungsbereichen A' und C' an,
h) der Außen-Durchmesser des Bereiches B der Welle bzw. des Schaftes (2) ist kleiner als der Durchmesser des BohrungsBereiches A',
i) der Bereich C der Welle bzw. des Schaftes ist axial länger oder gleich lang als der Bohrungsbereich B',
**dadurch gekennzeichnet,**
daß der Bereich B der Welle bzw. des Schaftes (2) axial kürzer als der Bohrungsbereichen A' oder gleich lang wie dieser ist.

2. Wellen- bzw. Schaft-Befestigung mit den Merkmalen a) bis g) des Oberbegriffs des Anspruchs 1,
**dadurch gekennzeichnet,**
daß der Außen-Durchmesser des Bereiches B der Welle bzw. des Schaftes (2) gleich dem Durchmesser des Bohrungsbereiches A' ist bzw. daß die Außen-Durchmesser der Bereiche A und B der Welle bzw. des Schaftes (2) gleich groß sind.

## Claims

1. Shaft or shank mounting in a bore of a receiving member, with the features:
a) the shaft or the shank (2) is cut positively into a region B' of the bore (3) via a region B which is toothed, in particular knurled, thereon,
b) a fitting portion C engaging with a perfect fit in a region C' of the bore is provided on the shaft or the shank (2) before the toothed region B in the assembly direction,
c) the identical-letter regions B, B' or C, C' of the shaft or the shank (2) and of the bore (3) rest on one another when the shaft or shank (2) is mounted in the bore (3),
d) the bore (3) is split into three axially adjacent regions A', B', C' with diameters which decrease relative to one another beginning with the region A' of greatest diameter in which the shaft or the shank (2) is first inserted with its region C,
e) the shaft or the shank (2) also has three axially adjoining regions A, B, C which are allocated to the identical-letter regions of the bore (3) in the mounted state,
f) the diameter of the region C of the shaft or of the shank (2) is smaller than the external diameter of the two other regions A, B,
g) the regions A and C of the shaft or shank (2) rest with a perfect fit in the associated bore regions A' and C',
h) the external diameter of the region B of the shaft or the shank (2) is smaller than the diameter of the bore region A',
i) the region C of the shaft or the shank is axially longer than or equally long to the bore region B',
characterised in that the region B of the shaft or of the shank (2) is axially shorter than the bore region A' or equally long to it.

2. Shaft or shank mounting with features a) to g) of the preamble of claim 1, characterised in that the external diameter of the region B of the shaft or of the shank (2) is equal to the diameter of the bore region A' and in that the external diameters of the regions A and B of the shaft or shank (2) are equal in size.

## Revendications

1. Fixation d'arbre et respectivement de tige dans un alésage d'un élément de réception, avec les particularités suivantes :
a) l'arbre et respectivement la tige (2) est entaillé à engagement positif, sur une partie B dentée et notamment moletée sur celui-ci ou celle-ci, dans une section B' de l'alésage (3),
b) l'arbre et respectivement la tige (2) présentent, dans la direction de guidage avant la section B dentée, une section d'ajustage C qui s'engage de manière ajustée dans une section C' de l'alésage,
c) les sections B, B' et respectivement C, C' de l'arbre ou de la tige (2) et de l'alésage (3) portant les mêmes lettres sont superposées lorsque l'arbre et respectivement la tige (2) sont fixés dans l'alésage (3),
d) l'alésage (3) est divisé en trois sections A', B', C' axialement contiguës, en commençant par la section A' avec le plus grand diamètre dans laquelle l'arbre ou la tige (2) est inséré en premier avec sa section C,
e) l'arbre ou la tige (2) comporte également trois sections A, B, C axialement contiguës qui, à l'état fixé, sont associées aux sections de l'alésage (3) portant les mêmes lettres,
f) le diamètre de la section C de l'arbre et respectivement de la tige (2) est inférieur aux diamètres extérieurs des deux autres sections A, B,
g) les sections A et C de l'arbre et respectivement de la tige (2) sont ajustées avec précision dans les sections A' et C' associées de l'alésage,
h) le diamètre extérieur de la section B de l'arbre et respectivement de la tige (2) est inférieur au diamètre de la section A' de l'alésage,
i)la section C de l'arbre et respectivement de la tige présente dans le sens axial une longueur supérieure ou égale à celle de la section d'alésage B',
**caractérisée en ce** que
la section B de l'arbre et respectivement de la tige (2) présente dans le sens axial une longueur inférieure ou égale à celle de la section d'alésage A'.

2. Fixation d'arbre et respectivement de tige avec les particularités a) à g) du préambule de la revendication 1, caractérisée en ce que le diamètre extérieur de la section B de l'arbre et respectivement de la tige (2) est égal au diamètre de la section d'alésage A' ou que les diamètres extérieurs des sections A et B de l'arbre et respectivement de la tige (2) sont égaux.
